# EUROPEAN PATENT APPLICATION

(11) **EP 4 723 003 A1**
(43) Date of publication of application: **08.04.2026**
(21) Application number: 25203291.7
(22) Date of filing: 19.09.2025
(51) Int. Cl.: G06Q 10/0631, G06F 30/13, G06Q 10/067, G06Q 10/101, G06Q 50/08

(54) **METHODS AND SYSTEMS FOR GENERATING A SUMMARY OF A PROPOSED BUILDING AUTOMATION SYSTEM**

(30) Priority: 01.10.2024 IN 202411074312
(71) Applicant: Honeywell International Inc., Charlotte, NC 28202 (US)
(72) Inventor: RAI, Aman, Charlotte, 28202 (US); SANDEEP, Deepika, Charlotte, 28202 (US); MUDUR, Guru, Charlotte, 28202 (US); NIGDE, Vikas, Charlotte, 28202 (US); BALAKRISHNA, Banuprakash, Charlotte, 28202 (US); MENDEZ, Renil Austin, Charlotte, 28202 (US); SARDAR, Souvik, Charlotte, 28202 (US)
(74) Representative: Haseltine Lake Kempner LLP

(57) **Abstract**

A list of equipment to implement a proposed building automation system may be generated based at least in part on a sequence of operation that describes how the proposed building automation system is to operate. A master standard library of different building automation system components includes a sequence of operation and an IO table for each of the different building automation system components. The sequence of operation that describes how the proposed building automation system is to operate, along with the master standard library of different building automation system components, are provided to a Large Language Model, which is prompted to generate the list of equipment based at least in part on the sequence of operation that describes how the proposed building automation system is to operate and the master standard library of different building automation system components. The list of equipment is outputted.

## Description

### TECHNICAL FIELD

The present disclosure relates generally to using Artificial Intelligence to generate a summary of a proposed building automation system.

### BACKGROUND

Preparing a response to an RFP (Request For Proposal) can be a labor-intensive process, particularly in the context of engineering, construction and project management. Determining what equipment and points are needed for a proposed building automation system can necessitate manually reviewing many documents including project specifications, Standard Operating Procedures (SOP) developed for the project, drawings and other relevant documents. MEP (Mechanical, Electrical and Plumbing) drawings are often analyzed to extract relevant information such as hardware points, field devices, controller sizes and software integration systems. Manual review of these and other documents can be time consuming, tedious and error prone. What would be desirable are methods and systems for extracting summary information associated with the proposed building automation system, which can be useful in, for example, responding to an RFP and/or in building out the proposed building automation system.

### SUMMARY

The present disclosure relates generally to using Artificial Intelligence to generate a summary of a proposed building automation system, which can be useful in, for example, responding to an RFP and/or in building out the proposed building automation system. An example may be found in a method for generating a list of equipment needed to implement a proposed building automation system based at least in part on a sequence of operation that describes how the proposed building automation system is to operate. The illustrative method includes storing a master standard library of different building automation system components, wherein the master standard library includes a sequence of operation and an Input/Output (IO) table for each of the different building automation system components. The sequence of operation that describes how the proposed building automation system is to operate, along with the master standard library of different building automation system components, are provided to a Large Language Model (e.g. an Artificial Intelligence Model). The Large Language model is prompted to generate the list of equipment based at least in part on the sequence of operation that describes how the proposed building automation system is to operate and the master standard library of different building automation system components. The method includes outputting the list of equipment.

Another example may be found in a method for identifying a quantity of each of a plurality of different building automation system components needed to implement a proposed building automation system. The illustrative method includes storing one or more schedule tables for at least part of the proposed building automation system and applying Optical Character Recognition to the one or more schedule tables, resulting in one or more text readable schedule tables. The one or more text readable schedule tables are provided to a Large Language Model, and the Large Language model is prompted to generate the quantity of each of the plurality of different building automation system components needed to implement a proposed building automation system based at least in part on one or more of the text readable schedule tables. The method includes outputting the quantity of each of the plurality of different building automation system components needed to implement at least part of a proposed building automation system.

Another example may be found in a method for generating an IO summary for at least part of a proposed building automation system based at least in part on a sequence of operation that describes how the proposed building automation system is to operate. The illustrative method includes storing a master standard library of different building automation system components, wherein the master standard library includes a sequence of operation and an IO summary for each of the different building automation system components. The sequence of operation that describes how the proposed building automation system is to operate, along with the master standard library of different building automation system components, are provided to a Large Language Model. The Large Language model is prompted to generate the IO summary for at least part of the proposed building automation system based at least in part on the sequence of operation that describes how the proposed building automation system is to operate and the master standard library of different building automation system components. The method includes outputting the IO summary.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative system;
Figures 2A and 2B are flow diagrams that together show an illustrative method for generating a list of equipment to implement a proposed building automation system;
Figures 3A and 3B are flow diagrams that together show an illustrative method for identifying a quantity of each of a plurality of different building automation system components;
Figure 4 is a flow diagram that shows an illustrative method for generating an IO summary for at least part of a proposed building automation system;
Figure 5 is a schematic block diagram providing an overview of an Artificial Intelligent Estimator;
Figure 6 is a schematic block diagram of an illustrative method using a sequence of operation of a proposed building automation system as an input to generate a Bill of Material (BOM) and/or an IO summary of the proposed building automation system;
Figure 7 is a schematic view of an illustrative sequence of operation referenced in Figure 6;
Figure 8 is a schematic block diagram of an illustrative method of using a schedule table as an input to generate a mechanical equipment count from the schedule table;
Figure 9 is a schematic block diagram of an illustrative method of using a sequence of operation and a master standard library as inputs to an LLM, which is prompted to output an IO table that includes a listing of sensors and their analog/digital points;
Figure 10 is a schematic view of part of an illustrative master standard library referenced in Figure 9;
Figure 11 is a schematic view of an illustrative IO table output by the illustrative method of Figure 9;
Figure 12 is a schematic block diagram providing an overview of a similarity search;
Figure 13 is a schematic view of an illustrative master standard library referenced in Figure 12;
Figure 14 is a schematic block diagram providing an illustrative method of using a mechanical drawing as an input to generate IO summaries for a proposed building automation system; and
Figure 15 is a schematic view of an illustrative mechanical drawing with recognized equipment in the mechanical drawing.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

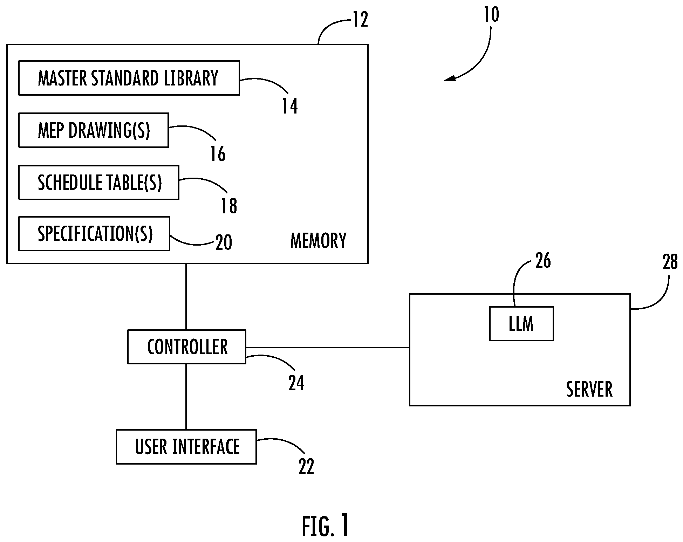

Figure 1 is a schematic block diagram showing an illustrative system 10. The system 10 is able to analyze a variety of different documents, such as but not limited to mechanical drawings, electrical drawings, plumbing drawings, IO schedule tables, specifications and other documents in order to automatically extract summary information associated with a proposed building automation system, which can be useful in, for example, responding to an RFP and/or in building out the proposed building automation system. This summary information may include lists of specific equipment that will be needed. This summary information may include points lists, for example. The system 10 includes a memory 12 that may be used to store a variety of different information. The memory 12 may be configured to store a master standard library 14. In some cases, the master standard library 14 may store a sequence of operation and an IO table for each of the different components that may be included in a proposed building automation system, for example. The sequence of operation may describe how the proposed building automation system is to operate in textual form. In some cases, the sequence of operation may be provided in a natural language text format. The IO table may identify sensors and their analog/digital points associated with each of the different building automation system components.

In some cases, the memory 12 may be configured to store one or more MEP (Mechanical, Electrical, Plumbing) drawings 16. In some cases, the MEP drawings 16 may include mechanical drawings that illustrate the necessary mechanical, electrical and plumbing equipment, and where each piece of mechanical, electrical and plumbing equipment is to be located relative to a floor plan of the facility. The MEP drawings 16 may include electrical drawings that illustrate what electrical components are included and where each of the electrical components will be located. The MEP drawings 16 may include plumbing drawings that illustrate what plumbing components are included and where each of the plumbing components will be located. In some cases, the MEP drawings may be simply referred to as mechanical drawings. The memory 12 may be configured to store one or more schedule tables 18 and one or more specifications 20 associated with the proposed building automation system. The specifications (20) may include one or more sequence of operations (SOP) associated with at least part of the proposed building automation system.

The system 10 includes a user interface 22 that may be used for uploading information to the system 10 as well as receiving information from the system 10. In some cases, the user interface 22 may include a display and a keyboard or mouse. In some cases, the user interface 22 may include a scanner. The memory 12 and the user interface 22 may be operably coupled with a controller 24. In some cases, the memory 12, the user interface 22 and the controller 24 may be parts of a desktop or laptop computer. In some cases, one or more of the memory 12, the user interface 22 and the controller 24 may be distributed within multiple locations. The controller 24 is operably coupled with an LLM (Large Language Model) 26. In some cases, the LLM 26 may be disposed on a remote server 28 such as a cloud-based server. In some cases, the LLM 26 may be disposed on a local computer, or even on a computer encompassing the memory 12, the user interface 22 and the controller 24.

The LLM 26 may be configured to receive the master standard library 14, the one or more MEP (Mechanical, Electrical, Plumbing) drawings 16, the schedule tables 18 and/or the specification(s) (sometimes includes SOP(s)) 18 associated with the proposed building automation system, and generate a list of equipment needed (Bill of Materials) for the proposed building automation system. As an example, the list of equipment may include an identifier for each of the different building automation system components of the master standard library that are needed to implement the proposed building automation system. The list of equipment may include a quantity of each of the different building automation system components needed to implement the proposed building automation system. The list of equipment may include an IO table that identifies points associated with each of the different building automation system components needed to implement the proposed building automation system.

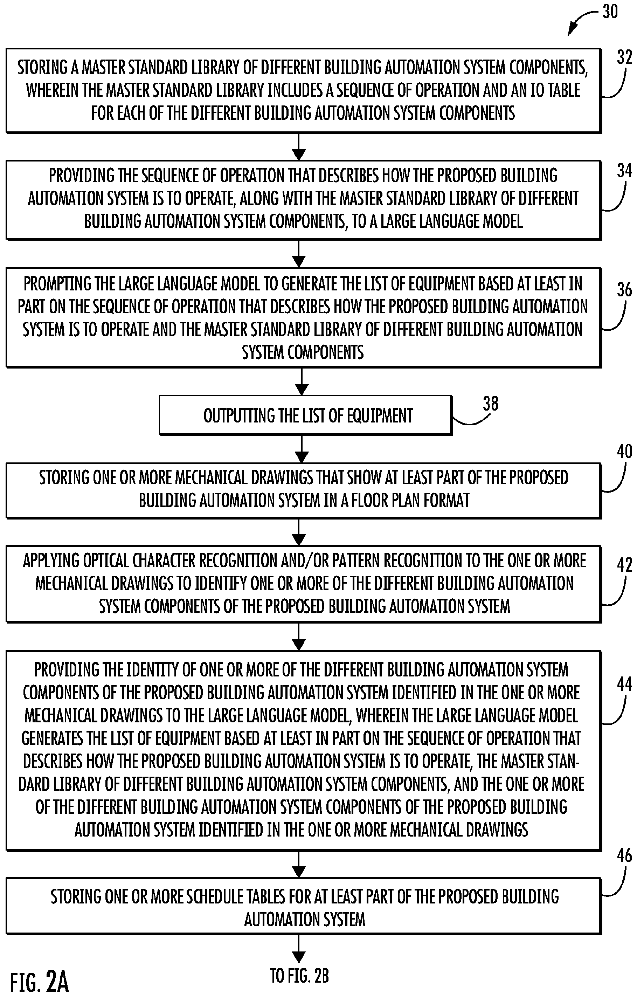

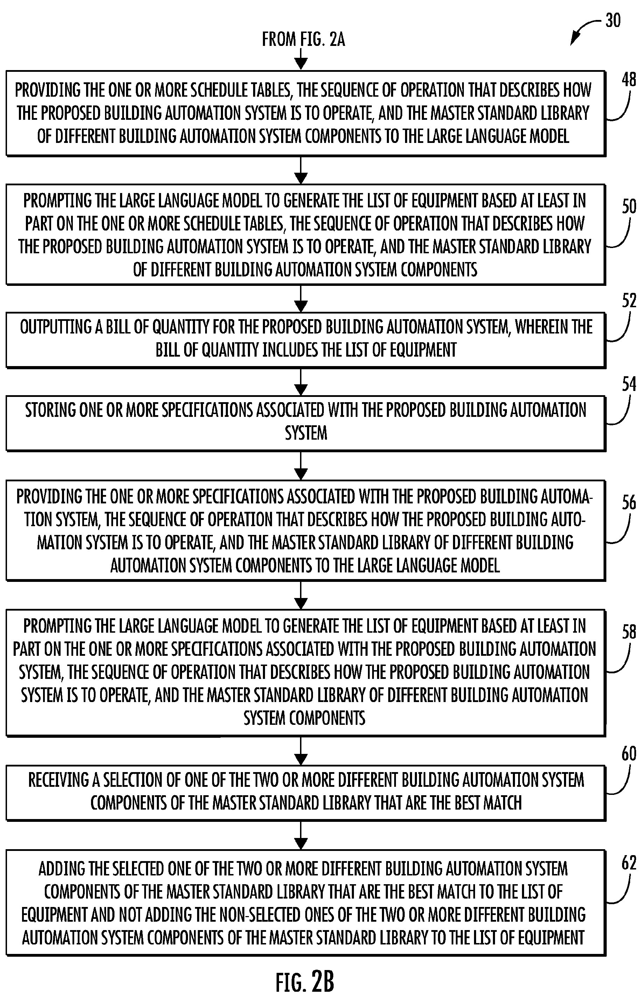

Figures 2A and 2B are flow diagrams that together show an illustrative method 30 for generating a list of equipment to implement a proposed building automation system based at least in part on a sequence of operation that describes how at least part of the proposed building automation system is to operate. The method 30 includes storing a master standard library (such as the master standard library 14) of different building automation system components, wherein the master standard library includes a sequence of operation and an IO table for each of the different building automation system components, as indicated at block 32. In some cases, the sequence of operations may be in a natural language text format. The sequence of operation that describes how the proposed building automation system is to operate, along with the master standard library of different building automation system components, is provided to a Large Language Model (such as the LLM 26), as indicated at block 34. The Large Language model is prompted to generate a list of equipment based at least in part on the sequence of operation that describes how the proposed building automation system is to operate and the master standard library of different building automation system components, as indicated at block 36. The list of equipment is outputted, such as via the user interface 22, as indicated at block 38. In some cases, the list of equipment may include an identifier for each of the different building automation system components of the master standard library that are needed to implement the proposed building automation system. In some cases, the list of equipment may include a quantity of each of the different building automation system components needed to implement the proposed building automation system. In some cases, the list of equipment may include an IO table that identifies sensors and points associated with each of the different building automation system components needed to implement the proposed building automation system.

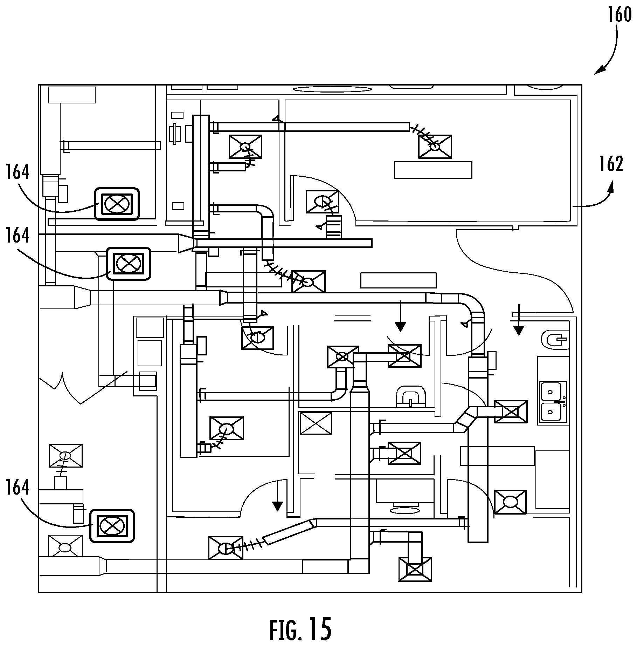

In some cases, the method 30 may include storing one or more mechanical drawings that show at least part of the proposed building automation system in a floor plan format, as indicated at block 40. Because the mechanical drawings may be graphic files, Optical Character Recognition (OCR) and/or pattern recognition may be applied to the one or more mechanical drawings to identify one or more of the different building automation system components of the proposed building automation system, as indicated at block 42 (see, for example, Figure 15). The identity of one or more of the different building automation system components of the proposed building automation system identified in the one or more mechanical drawings may be provided to the Large Language Model, wherein the Large Language model generates the list of equipment based at least in part on the sequence of operation that describes how the proposed building automation system is to operate, the master standard library of different building automation system components, and the one or more of the different building automation system components of the proposed building automation system identified in the one or more mechanical drawings, as indicated at block 44.

In some cases, the method 30 may include storing one or more schedule tables for at least part of the proposed building automation system, as indicated at block 46. Continuing on Figure 2B, the one or more schedule tables, the sequence of operation that describes how the proposed building automation system is to operate, and the master standard library of different building automation system components may be provided to the Large Language Model, as indicated at block 48. The Large Language model may be prompted to generate the list of equipment based at least in part on the one or more schedule tables, the sequence of operation that describes how the proposed building automation system is to operate, and the master standard library of different building automation system components, as indicated at block 50.

In some cases, a Bill of Quantity (BOQ) for the proposed building automation system that includes the list of equipment may be outputted, as indicated at block 52. In some cases, the list of equipment may include an IO table that identifies sensors and/or points associated with one or more of the different building automation system components needed to implement the proposed building automation system.

In some cases, the method 30 may include storing one or more specifications associated with the proposed building automation system, as indicated at block 54. The one or more specifications associated with the proposed building automation system, the sequence of operation that describes how the proposed building automation system is to operate (which in some cases may be part of the one or more specifications), and the master standard library of different building automation system components may be provided to the Large Language Model, as indicated at block 56. The Large Language model may be prompted to generate the list of equipment based at least in part on the one or more specifications associated with the proposed building automation system, the sequence of operation that describes how the proposed building automation system is to operate, and the master standard library of different building automation system components, as indicated at block 58.

In some cases, there may not be an exact match, and the Large Language Model may identify two or more different building automation system components of the master standard library that are a best match for at least part of the sequence of operation that describes how the proposed building automation system is to operate. The method 30 may include receiving a selection of one of the two or more different building automation system components of the master standard library that are identified as the best match, as indicated at block 60. The selected one of the two or more different building automation system components of the master standard library that are the best match may be added to the list of equipment and the non-selected ones of the two or more different building automation system components of the master standard library may not be added to the list of equipment, as indicated at block 62.

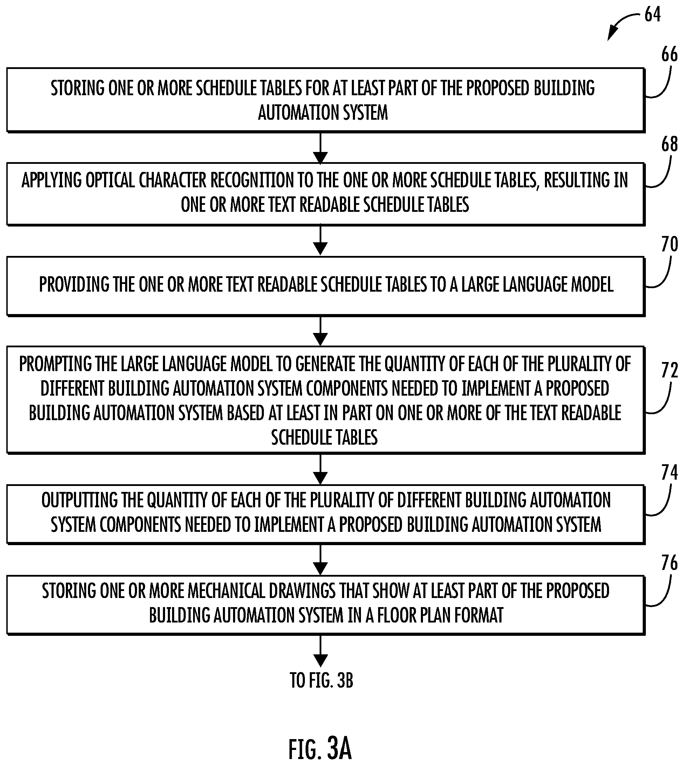

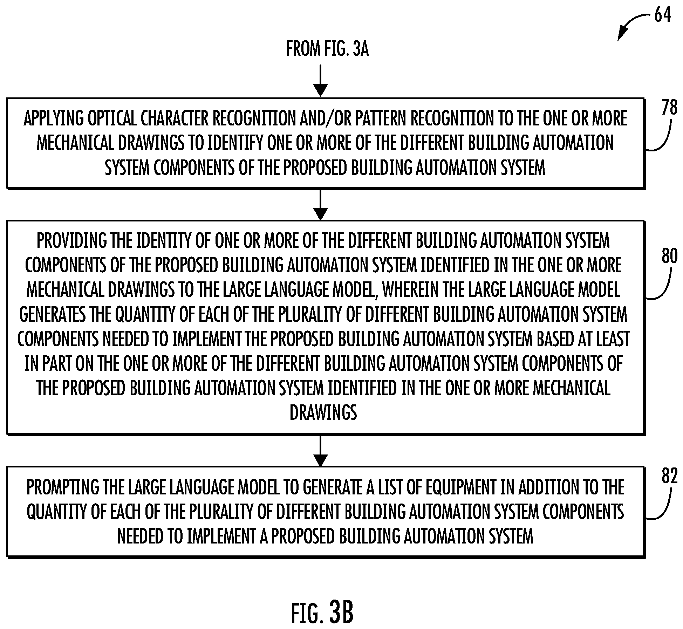

Figures 3A and 3B are flow diagrams that together show an illustrative method 64 for identifying a quantity of each of a plurality of different building automation system components needed to implement a proposed building automation system. The method includes storing one or more schedule tables for at least part of the proposed building automation system, as indicated at block 66. When the text in the one or more schedule tables is not directly readable, Optical Character Recognition (OCR) is applied to the one or more schedule tables, resulting in one or more text readable schedule tables, as indicated at block 68. The one or more text readable schedule tables are provided to a Large Language Model, as indicated at block 70. The Large Language model is prompted to generate the quantity of each of the plurality of different building automation system components needed to implement a proposed building automation system based at least in part on one or more of the text readable schedule tables, as indicated at block 72. The quantity of each of the plurality of different building automation system components needed to implement a proposed building automation system is outputted, as indicated at block 74.

In some cases, the method 64 may include storing one or more mechanical drawings that show at least part of the proposed building automation system in a floor plan format, as indicated at block 76. Continuing on Figure 3B, Optical Character Recognition and/or pattern recognition may be applied to the one or more mechanical drawings to identify one or more of the different building automation system components of the proposed building automation system, as indicated at block 78. In some cases, the identity of one or more of the different building automation system components of the proposed building automation system identified in the one or more mechanical drawings may be provided to the Large Language Model, wherein the Large Language model generates the quantity of each of the plurality of different building automation system components needed to implement the proposed building automation system based at least in part on the one or more of the different building automation system components of the proposed building automation system identified in the one or more mechanical drawings, as indicated at block 80. In some cases, the Large Language model may be prompted to generate a list of equipment in addition to the quantity of each of the plurality of different building automation system components needed to implement a proposed building automation system, as indicated at block 82. In some cases, the Large Language Model may generate the list of equipment based at least in part on a sequence of operation that describes how the proposed building automation system is to operate and a master standard library of different building automation system components. In some cases, the one or more schedule tables for at least part of the proposed building automation system may be generated as part of a Request For Proposal (RFP).

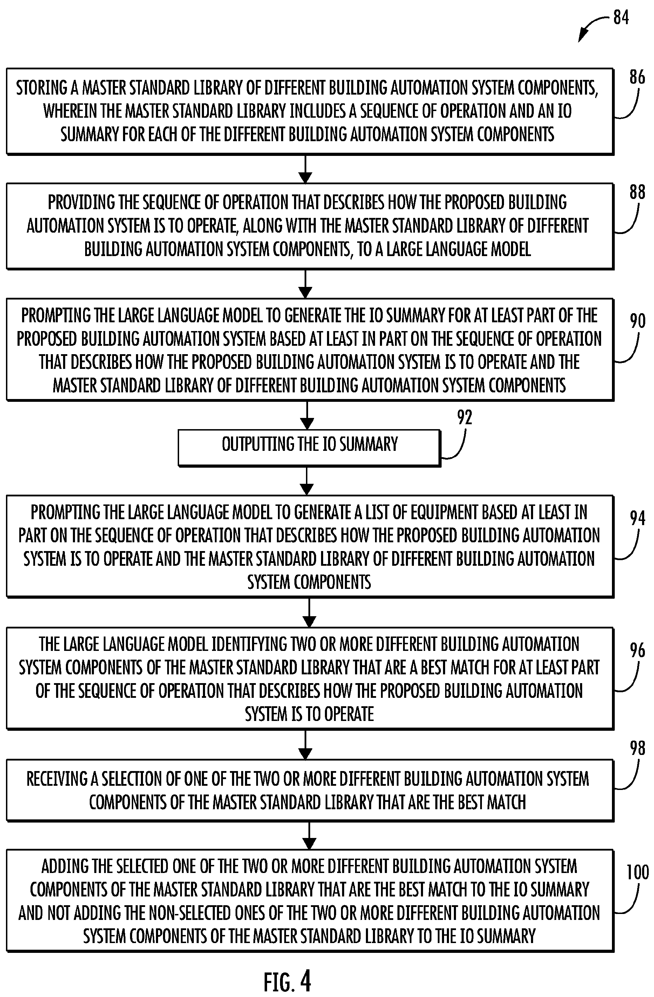

Figure 4 is a flow diagram showing an illustrative method 84 for generating an IO summary for at least part of a proposed building automation system based at least in part on a sequence of operation that describes how the proposed building automation system is to operate. The method 84 includes storing a master standard library of different building automation system components, wherein the master standard library includes a sequence of operation and an IO summary for each of the different building automation system components, as indicated at block 86. The sequence of operation that describes how the proposed building automation system is to operate, along with the master standard library of different building automation system components, is provided to a Large Language Model, as indicated at block 88. The Large Language model is prompted to generate the IO summary for at least part of the proposed building automation system based at least in part on the sequence of operation that describes how the proposed building automation system is to operate and the master standard library of different building automation system components, as indicated at block 90. For example, a prompt such as the following may be provided to the LLM:
The text named 'rfp_io_prompt' contains count of AI/AO/DI/DO for parts of all equipment. Refer to this textual table. Use this as your knowledge base to relate different models with their Analog Input/Analog Output/Digital Input/Digital Output points. As an input, refer the mentioned text named 'sequence' info to get a context regarding the equipment and its different sensors and then provide the count of Analog Input/Analog Output/Digital Input/Digital Output by equipment part in same format as above text 'rfp_io_prompt' with column names.
The IO summary is outputted, as indicated at block 92. In some cases, the IO summary may identify connection points and/or specification compliance of the IO of at least some of the different building automation system components needed to implement at least part of the proposed building automation system.

In some cases, the method 84 may include prompting the Large Language model to generate a list of equipment based at least in part on the sequence of operation that describes how the proposed building automation system is to operate and the master standard library of different building automation system components, as indicated at block 94. In some cases, the method 84 may include the Large Language Model identifying two or more different building automation system components of the master standard library that are a best match for at least part of the sequence of operation that describes how the proposed building automation system is to operate, as indicated at block 96. As an example, the LLM may use a similarity matching algorithm to compare the sequence of operation that describes how the proposed building automation system is to operate with the sequences of operation, IO points, IO tables and/or other details of the different building automation system components in the master standard library to identify two or more best matching building automation system components of the master standard library.

A selection of one of the two or more different building automation system components of the master standard library that are the best match may be received, as indicated at block 98. The selection may be made by a user via a user interface, such as user interface 22 of Figure 1. The selected one of the two or more different building automation system components of the master standard library that are the best match are added to the BOM, BOQ, I/O table, IO summary and/or other output, and the non-selected ones of the two or more different building automation system components of the master standard library are not added to the BOM, BOQ, I/O table, IO summary and/or other output, as indicated at block 100.

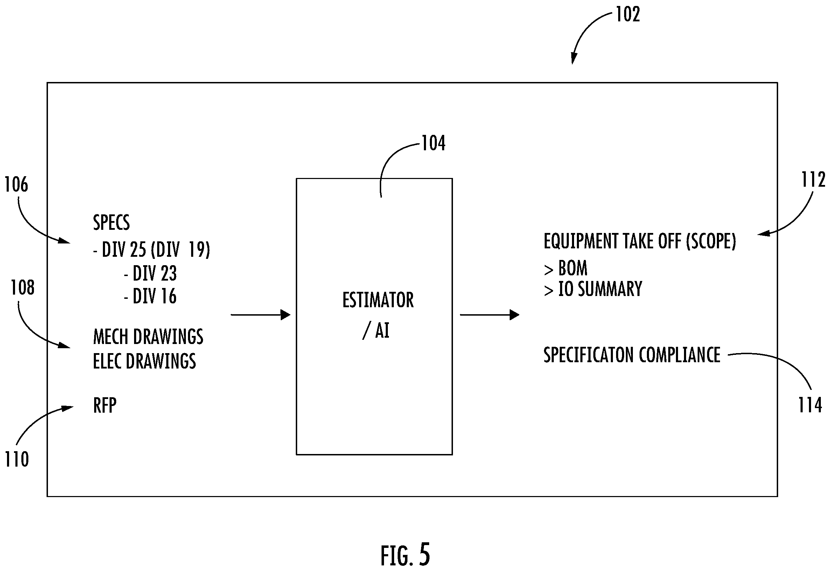

Figure 5 is a schematic block diagram providing an overview 102 in which a number of inputs are provided to an Artificial Intelligence (AI) estimator 104. The AI estimator 104 may include an LLM. The inputs may include specifications 106 such as Division 25 (Integrated Automation), Division 19 (reserved for future), Division 23 (Heating, Ventilation and Air Conditioning), Division 16 (reserved for future) and others. The inputs may include drawings 108 including mechanical drawings (e.g. MEP drawings). The inputs may include an RFP (Request For Proposal) 110. The AI estimator 104 may use an LLM (Large Language Model) such as the LLM 26, OCR (Optical Character Recognition) and/or PDF retrieval techniques for extracting information from the various documents when necessary. The outputs from the AI estimator 104 may include equipment takeoff 112 (e.g. the equipment that is identified in the mechanical drawings), a BOM (Bill Of Material) that is a detailed list of all of the equipment, parts and materials needed for the project and an I/O summary that details connection points needed to implement the proposed building automation system. The outputs also include a report regarding compliance of the proposed building automation system with the appropriate specification(s) 106, as shown at 114.

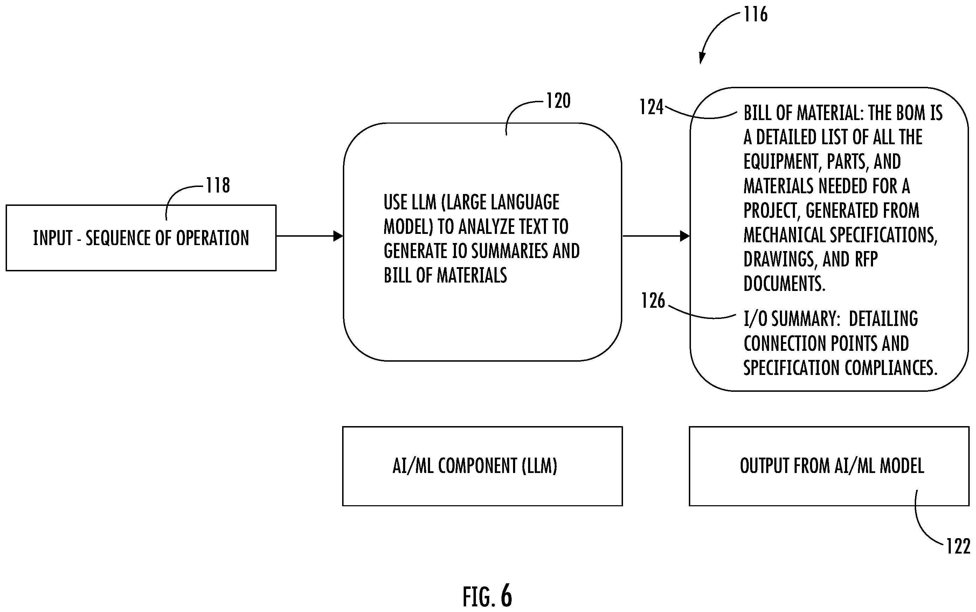

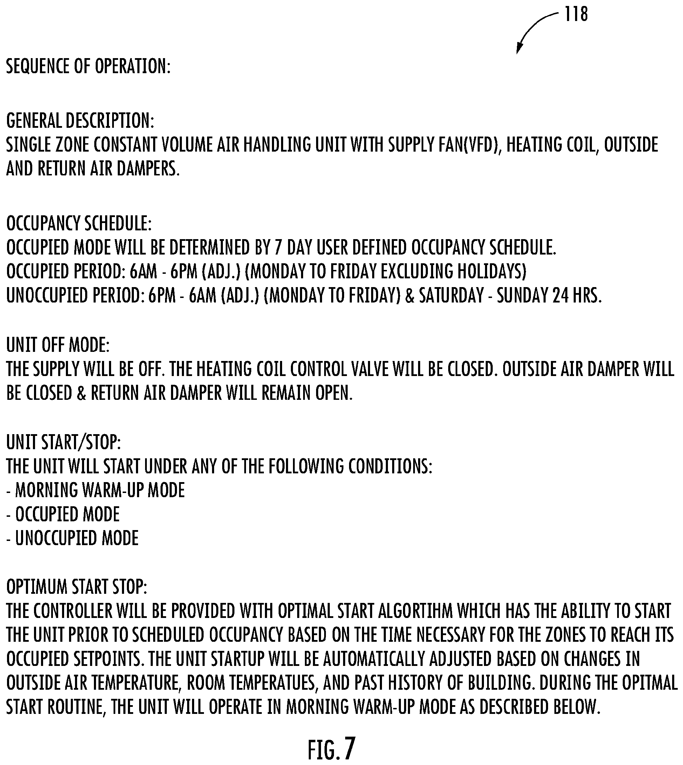

Figure 6 is a schematic block diagram of an illustrative method 116 using a sequence of operation 118 of a proposed building automation system as an input to generate a Bill of Material (BOM) 124 and/or an IO summary 126 of the proposed building automation system. The sequence of operation 118 of a proposed building automation system is shown in greater detail in Figure 7. As seen in Figure 7, the illustrative sequence of operation of the proposed building automation system includes information including a general description, an occupancy schedule, a Unit OFF mode, a Unit Start/Stop and an Optimum Start Stop. This is just an example, and may vary from system to system. Returning to Figure 6, an LLM 26 is used to analyze text of the sequence of operation 118 of the proposed building automation system to generate an output, as indicated at block 120. The output 122 includes a BOM (Bill Of Material) 124 and an I/O summary 126 in this example.

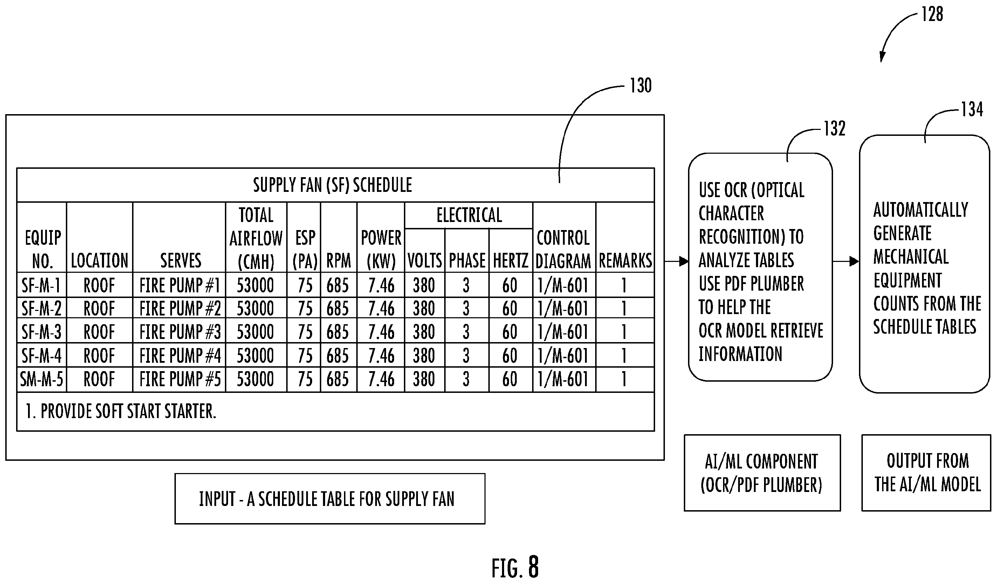

Figure 8 is a schematic block diagram of an illustrative method 128 of using a schedule table 130 as an input to generate a mechanical equipment count 133 from the schedule table 130. It will be appreciated that there may be additional inputs as well (not shown). The method 128 includes, as shown, a supply fan schedule 130. The supply fan schedule 130 is analyzed using OCR (Optical Character Recognition) and pdf information retrieval techniques (PDF Plumber), as indicated at block 132. An AI/ML model (e.g. LLM) is used to generate an output 134 that includes automatically generated mechanical equipment counts from the schedule table(s) 130.

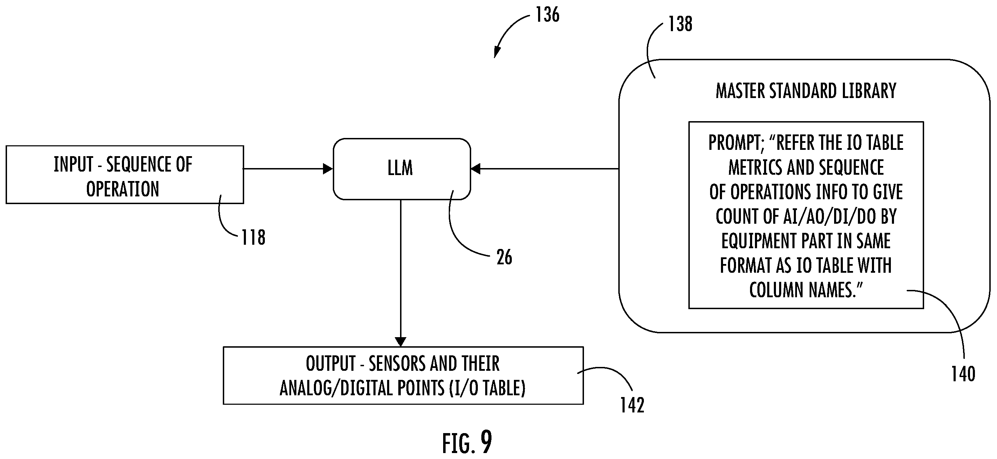

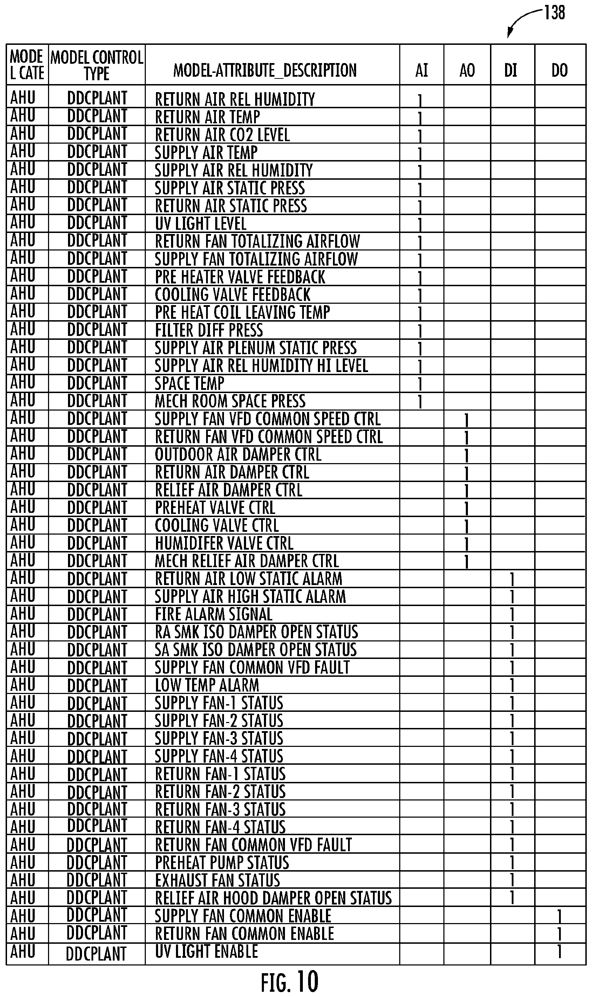

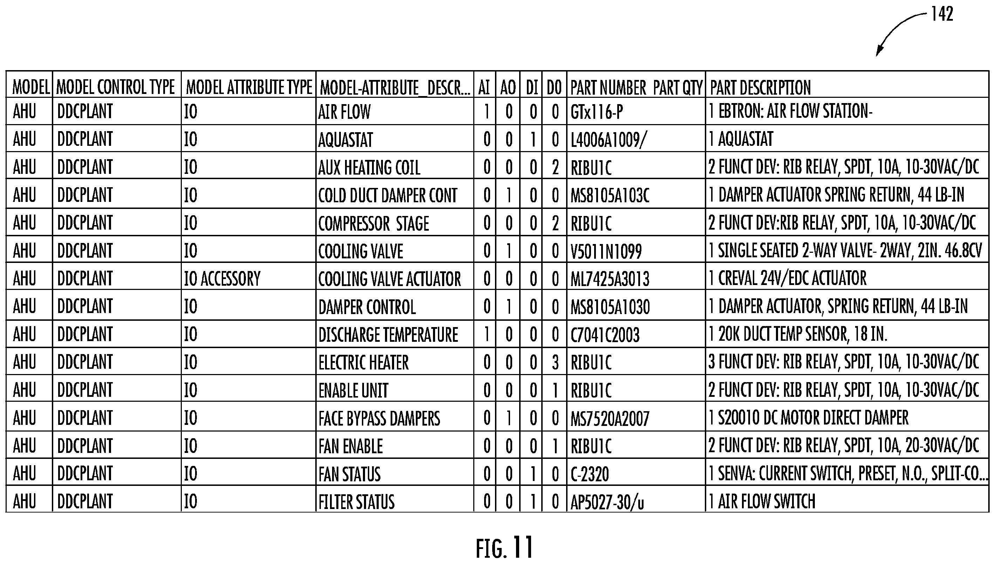

Figure 9 is a schematic block diagram of an illustrative method 136 of using a sequence of operation 118 and a master standard library 138 as inputs to an LLM 26, which is prompted to output an IO table 142 that includes a listing of sensors and their analog/digital points. For example, the LLP may be prompted with "Give me the breakdown of monitoring points and sensors present by referring the following sequence of operations", or "Give me the list of Analog Input/Analog Output/Digital Input/Digital Output by referring to the following sequence of operations". The method 136 includes a sequence of operation 118 (e.g. Figure 7) as an input to the LLM 26. A Master Standard Library 138 (e.g. Figure 10) and a prompt 140 are also provided as inputs to the LLM 26. As seen in Figure 10, the Master Standard Library 138 includes a listing of different mechanical equipment along with their sequence of operation and I/O table, including AI (Analog Input), AO (Analog Output), DI (Digital Input) and DO (Digital Output). The LLM 26 provides an output 142, better seen in Figure 11. In this example, the output 142 includes a listing of sensor names, part numbers and part descriptions from the Master Standard Library 138.

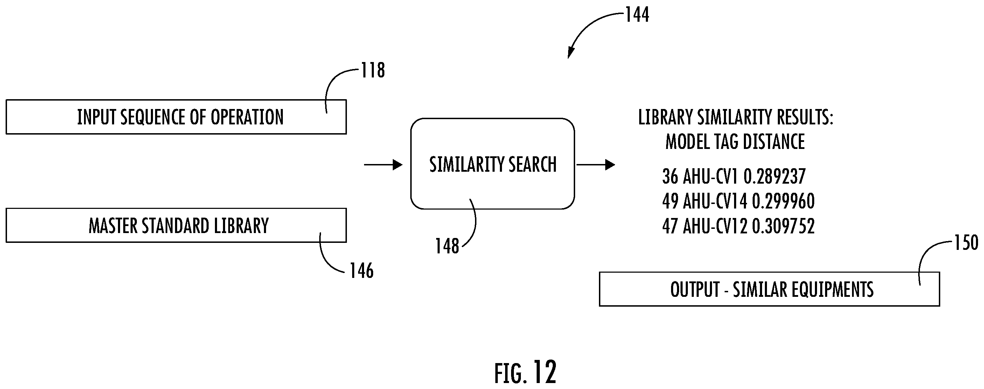

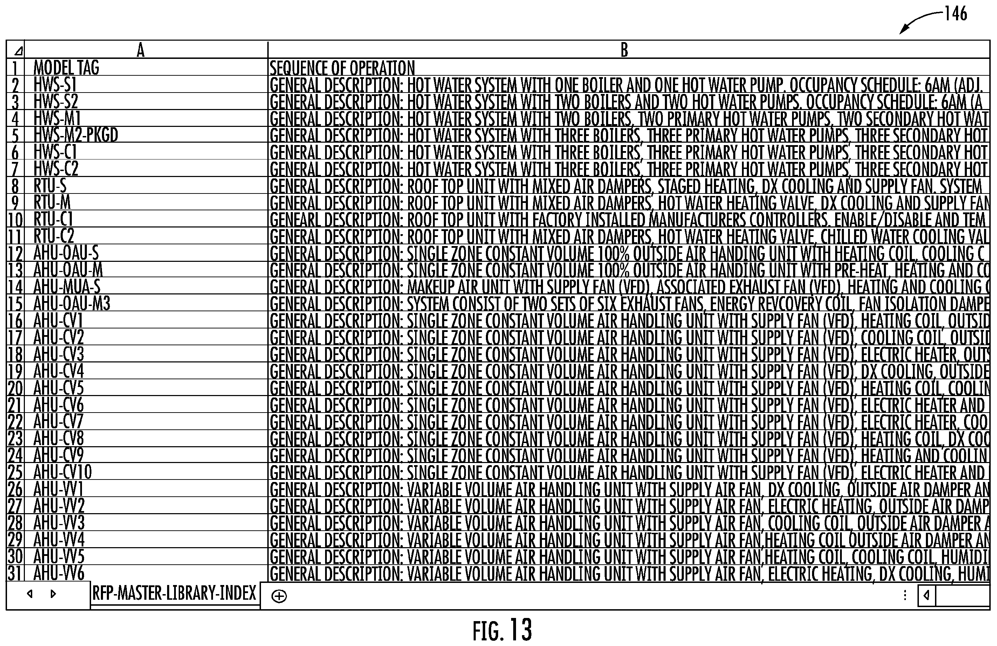

Figure 12 is a schematic block diagram providing an overview 144 of a similarity search. In this example, inputs include the sequence of operation 118 of the proposed building automation system and a master standard library 146, better seen in Figure 13. With respect to Figure 13, it can be seen that the master standard library 146 (which is another example of a master standard library, relative to the master standard library 138) includes different mechanical equipment along with their sequence of operation and I/O table and is used by the LLM as a domain specific knowledge base. Returning to Figure 12, a similarity search is performed, as indicated at block 148. The similarity search may be performed by the LLM. An output 150 includes a listing of similar equipment from the master standard library 146 from which an operator can select from. This may occur when multiple different pieces of equipment are identified in the master standard library 146 that can be used to implement the proposed building automation system, for example. In this particular example, three different AHUs (Air Handling Unit) are displayed as best or closes matches. An operator may then choose one of the three AHU's for use in the proposed building automation system.

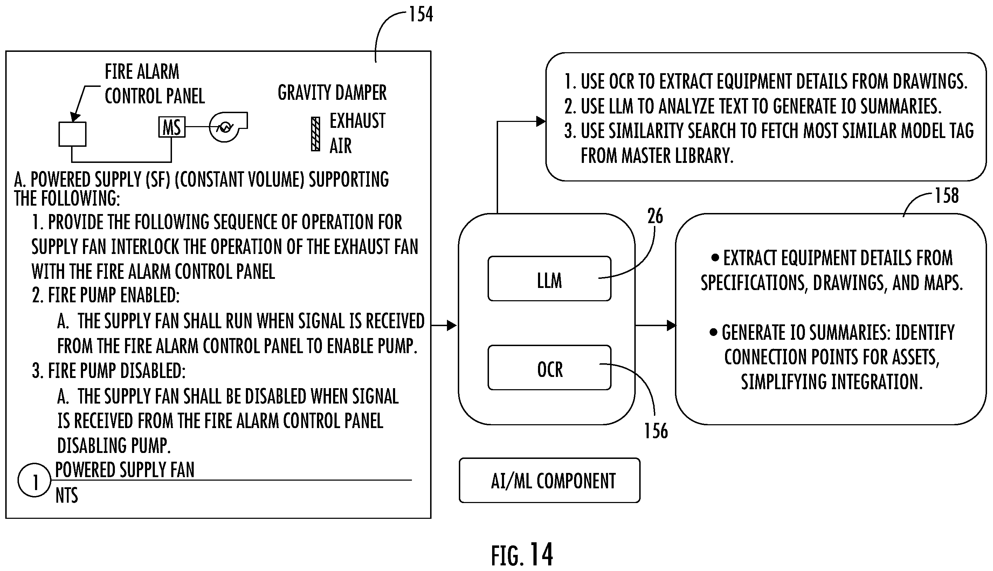

Figure 14 is a schematic block diagram providing an illustrative method 152 of using one or more MEP drawings as an input to generate an IO summary for a proposed building automation system. As an example, a mechanical drawing 154 is shown. The input or inputs (there may be additional inputs not shown here) are provided to an OCR block 156, with the output being provided to LLM 26. The LLM 26 is used to analyze text in the mechanical drawing 154 to generate IO summaries. In some cases, a similarity search (see Figure 12) may be used to fetch the most similar equipment from the master standard library 146 from which an operator can select from. The output 158 includes equipment details that were extracted from specifications, drawings and/or other information. In the example shown, the output 158 includes generated IO summaries that identify connection points for the identified equipment. This can simplify build out and integration.

Figure 15 is a schematic view of an illustrative mechanical drawing 160. The illustrative mechanical drawing 160 includes a floor plan 162 with HVAC ductwork superimposed on the floor plan 162. Recognized equipment 164 has been identified on the mechanical drawing 160 by, for example, identifying predetermined shapes and/or icons in the mechanical drawing 160 via an OCR, pattern recognition and/or AI recognition engine. Once identified, the identified equipment can be provided to an LLM to help generate a summary of the proposed building automation system that is represented in the mechanical drawing 160.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for generating a list of equipment to implement a proposed building automation system based at least in part on a sequence of operation that describes how the proposed building automation system is to operate, the method comprising:
storing a master standard library of different building automation system components, wherein the master standard library includes a sequence of operation and an **IO** table for each of the different building automation system components;
providing the sequence of operation that describes how the proposed building automation system is to operate, along with the master standard library of different building automation system components, to a Large Language Model;
prompting the Large Language model to generate the list of equipment based at least in part on the sequence of operation that describes how the proposed building automation system is to operate and the master standard library of different building automation system components; and
outputting the list of equipment.

2. The method of claim 1, wherein the list of equipment includes an identifier for each of the different building automation system components of the master standard library that are needed to implement the proposed building automation system.

3. The method of either of claims 1 or 2, wherein:
the list of equipment includes a quantity of each of the different building automation system components needed to implement the proposed building automation system; or
the list of equipment includes an IO table that identifies points ]associated with each of the different building automation system components needed to implement the proposed building automation system; and/or
wherein the sequence of operation that describes how the proposed building automation system is to operate is in a natural language text format.

4. The method of any preceding claim, further comprising:
storing one or more mechanical drawings that show at least part of the proposed building automation system in a floor plan format;
applying Optical Character Recognition and/or pattern recognition to the one or more mechanical drawings to identify one or more of the different building automation system components of the proposed building automation system; and
providing the identity of one or more of the different building automation system components of the proposed building automation system identified in the one or more mechanical drawings to the Large Language Model, wherein the Large Language model generates the list of equipment based at least in part on the sequence of operation that describes how the proposed building automation system is to operate, the master standard library of different building automation system components, and the one or more of the different building automation system components of the proposed building automation system identified in the one or more mechanical drawings.

5. The method of any preceding claim, further comprising:
storing one or more schedule tables for at least part of the proposed building automation system;
providing the one or more schedule tables, the sequence of operation that describes how the proposed building automation system is to operate, and the master standard library of different building automation system components to the Large Language Model; and
prompting the Large Language model to generate the list of equipment based at least in part on the one or more schedule tables, the sequence of operation that describes how the proposed building automation system is to operate, and the master standard library of different building automation system components.

6. The method of any preceding claim, further comprising outputting a Bill of Quantity for the proposed building automation system, wherein the Bill of Quantity includes the list of equipment, and, optionally:
wherein the list of equipment includes an IO table that identifies points associated with one or more of the different building automation system components needed to implement the proposed building automation system.

7. The method of any preceding claim, further comprising:
storing one or more specifications associated with the proposed building automation system;
providing the one or more specifications associated with the proposed building automation system, the sequence of operation that describes how the proposed building automation system is to operate, and the master standard library of different building automation system components to the Large Language Model; and
prompting the Large Language model to generate the list of equipment based at least in part on the one or more specifications associated with the proposed building automation system, the sequence of operation that describes how the proposed building automation system is to operate, and the master standard library of different building automation system components.

8. The method of any preceding claim, wherein the Large Language Model identifies two or more different building automation system components of the master standard library that are a best match for at least part of the sequence of operation that describes how the proposed building automation system is to operate;
optionally wherein the method further comprises:
receiving a selection of one of the two or more different building automation system components of the master standard library that are the best match; and
adding the selected one of the two or more different building automation system components of the master standard library that are the best match to the list of equipment and not adding the non-selected ones of the two or more different building automation system components of the master standard library to the list of equipment.

9. A method for identifying a quantity of each of a plurality of different building automation system components needed to implement a proposed building automation system, the method comprising:
storing one or more schedule tables for at least part of the proposed building automation system;
applying Optical Character Recognition to the one or more schedule tables, resulting in one or more text readable schedule tables;
providing the one or more text readable schedule tables to a Large Language Model;
prompting the Large Language model to generate the quantity of each of the plurality of different building automation system components needed to implement a proposed building automation system based at least in part on one or more of the text readable schedule tables; and
outputting the quantity of each of the plurality of different building automation system components needed to implement a proposed building automation system.

10. The method of claim 9, further comprising:
storing one or more mechanical drawings that show at least part of the proposed building automation system in a floor plan format;
applying Optical Character Recognition and/or pattern recognition to the one or more mechanical drawings to identify one or more of the different building automation system components of the proposed building automation system; and
providing the identity of one or more of the different building automation system components of the proposed building automation system identified in the one or more mechanical drawings to the Large Language Model, wherein the Large Language model generates the quantity of each of the plurality of different building automation system components needed to implement the proposed building automation system based at least in part on the one or more of the different building automation system components of the proposed building automation system identified in the one or more mechanical drawings.

11. The method of either of claims 9 or 10, further comprising prompting the Large Language model to generate a list of equipment in addition to the quantity of each of the plurality of different building automation system components needed to implement a proposed building automation system; and
optionally, wherein the Large Language Model generating the list of equipment based at least in part on a sequence of operation that describes how the proposed building automation system is to operate and a master standard library of different building automation system components.

12. The method of any of claims 9-11, wherein the one or more schedule tables for at least part of the proposed building automation system are generated as part of a Request For Proposal (RFP).

13. A method for generating an IO summary for at least part of a proposed building automation system based at least in part on a sequence of operation that describes how the proposed building automation system is to operate, the method comprising:
storing a master standard library of different building automation system components, wherein the master standard library includes a sequence of operation and an IO summary for each of the different building automation system components;
providing the sequence of operation that describes how the proposed building automation system is to operate, along with the master standard library of different building automation system components, to a Large Language Model;
prompting the Large Language model to generate the IO summary for at least part of the proposed building automation system based at least in part on the sequence of operation that describes how the proposed building automation system is to operate and the master standard library of different building automation system components; and
outputting the IO summary.

14. The method of claim 13, comprising:
prompting the Large Language model to generate a list of equipment based at least in part on the sequence of operation that describes how the proposed building automation system is to operate and the master standard library of different building automation system components.

15. The method of either of claims 13 or 14, wherein:
the Large Language Model identifying two or more different building automation system components of the master standard library that are a best match for at least part of the sequence of operation that describes how the proposed building automation system is to operate;
receiving a selection of one of the two or more different building automation system components of the master standard library that are the best match; and
adding the selected one of the two or more different building automation system components of the master standard library that are the best match to the IO summary and not adding the non-selected ones of the two or more different building automation system components of the master standard library to the IO summary.
